# EUROPÄISCHE PATENTSCHRIFT

(11) **EP 1 036 827 B1**
(45) Veröffentlichungstag und Bekanntmachung des Hinweises auf die Patenterteilung: **29.06.2005**
(21) Anmeldenummer: 00104792.7
(22) Anmeldetag: 06.03.2000
(51) Int. Cl.: C09D 4/00, C09D 183/08, C09D 183/14

(54) **Verfahren zur Herstellung einer bewitterungsbeständigen Beschichtung**
Process for the preparation of paints to be exposed to bad weather
Procédé de fabrication de peintures exposables aux intempéries

(30) Priorität: 11.03.1999 DE 19910876
(43) Veröffentlichungstag der Anmeldung: 20.09.2000
(73) Patentinhaber: Fraunhofer-Gesellschaft zur Förderung der angewandten Forschung e.V., 80686 München (DE)
(72) Erfinder: Sandrock, Johannes, Dipl.-Chem., 77694 Kehl (DE); Schottner, Gerhard, Dipl.-Chem., 91560 Heilsbronn/Buerglein (DE)

(56) Entgegenhaltungen:
- EP-A- 0 867 444
- EP-A- 0 872 500
- WO-A-97/02272
- DE-A- 3 836 815
- PATENT ABSTRACTS OF JAPAN vol. 1995, no. 01, 28. Februar 1995 (1995-02-28) & JP 06 291186 A (TOSHIBA CORP), 18. Oktober 1994 (1994-10-18)
- PATENT ABSTRACTS OF JAPAN vol. 1997, no. 03, 31. März 1997 (1997-03-31) & JP 08 291186 A (NITTO BOSEKI CO LTD), 5. November 1996 (1996-11-05)

## Beschreibung

Die Erfindung betrifft ein Verfahren zur Herstellung einer bewitterungsbeständigen Beschichtung bei dem eine Beschichtung aus einer hydrolysierbaren Siliciumverbindung aufgebracht wird, die ein kovalent gebundenes, blockiertes Isocyanat aufweist.

Beschichtungen auf Substraten auf der Basis von hydrolysierbaren Siliciumverbindungen sind bekannt. Insbesondere die Stoffklasse der sogenannten "ORMOCERE" wurde in den letzten Jahren eingehend, insbesondere mit Bezug auf Beschichtungen von verschiedenen Substraten untersucht. In der EP 0 450 625 A1 ist eine derartige "ORMOCERE"-Beschichtung zum Beschichten von Kunststoffsubstraten beschrieben. Hierbei werden hydrolysierbare Siliciumverbindungen auf einem Substrat abgeschieden, durch Bestrahlung gehärtet und anschließend einer thermischen Nachhärtung unterzogen. Weitere derartige Verfahren und Beschichtungen sind aus der EP 0 365 027 A2 wie auch aus der DE 38 36 815 bekannt.

Nachteilig bei all diesen, bisher aus dem Stand der Technik bekannten hybriden Sol-Gel-Schichten (ORMOCERE) ist, daß die bisher zugänglichen Schichten nicht im Außenbereich eingesetzt werden konnten, da unter dem Einfluß von Licht, Feuchtigkeit und/oder Temperaturwechsel keine stabilen Schichten erhältlich waren.

Ausgehend hiervon ist es die Aufgabe der vorliegenden Erfindung ein neuartiges Verfahren zum Herstellen von Beschichtungen auf Substraten anzugeben das zwar auf der Basis der bisher im Stand der Technik bekannten hybriden Sol-Gel-Schichten mit (ORMOCERE) beruhen soll, das aber zu Schichten führt, die auch unter Bewitterungsverhältnissen wie sie im Außenbereich vorliegen, über längere Zeit stabil bleiben.

Die Aufgabe wird durch die kennzeichnenden Merkmale des Patentanspruches 1 gelöst. Die Unteransprüche zeigen vorteilhafte Weiterbildungen auf.

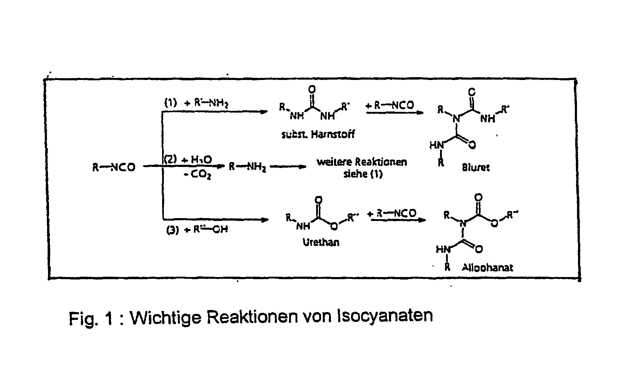

Erfindungsgemäß wird somit der Einsatz von blockierten Isocyanatosilanen im Sol-Gel-Prozeß vorgeschlagen. Erst durch Temperaturerhöhung wird das Isocyanat deblockiert und kann mit verschiedenen zum Teil bekannten weiteren hydrolysierbaren Siliciumverbindungen und/oder Metallverbindungen und/oder organischen Polymeren Verknüpfungsreaktionen eingehen. Die wichtigsten sind dabei die Umsetzung mit Hydroxygruppen, Aminen, Wasser und die der jeweiligen Reaktionsprodukte mit einem weiteren Isocyanat. In Fig. 1 ist ein entsprechendes Reaktionsschema wiedergegeben, das die Reaktionsmöglichkeiten der Isocyanate mit Aminen, Wasser und Hydroxygruppen zeigt.

Überraschenderweise hat es sich nun herausgestellt, daß die Beschichtungen, die mit derartigen blockierten Isocyanatosilanen hergestellt worden sind, überlegene Eigenschaften in bezug auf die Haftung, Vergilbung, Rißbildung und den Glanzverlust aufweisen. Die Anmelderin konnte zeigen, daß die neuen Schichtmaterialien bis zu 1500 Stunden im QUV-B Test (40 °C/60°C) ohne erkennbare Veränderung stabil sind.

Erfindungsgemäß wird die bewitterungsbeständige Beschichtung so hergestellt, daß die hydrolytische Kondensation mit 50 bis 100 Mol-%, bevorzugt 50 bis 90 Mol-%, bezogen auf die monomeren Ausgangskomponenten durchgeführt wird, wobei eine hydrolysierbare Siliciumverbindung der allgemeinen Formel I

I Xₘ-Si-R₄₋ₘ-Yₙ

eingesetzt wird. Die Reste in der allgemeinen Formel I haben dabei folgende Bedeutung:

X ist gleich oder verschieden und kann Wasserstoff, Halogen, Alkoxy, Acyloxy, Alkylcarbonyl, Alkoxycarbonyl oder - NR'₂(R' -H und/oder Alkyl) bedeuten und die Reste R, die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe -NR' oder NHC(O)O- unterbrochen sein können und einen oder mehrere Substituenten aus der Gruppe der Halogene und der gegebenenfalls substitutierten-Amino-, Amid-, Aldehyd-, Keto-, Alkylcarbonyl-, Carboxy-, Mercapto-, Cyano-, Hydroxy-, Alkoxy-, Alkoxycarbonyl, Sulfonsäure-, Phosphorsäure-, Acryloxy-, Methacryloxy-, Epoxy- oder Vinylgruppen tragen können und Y ein blockiertes Isocyanat ist mit m = 1 bis 3 und n = 1 bis 3 und zur Blockierung des Isocyanats Dimethylpyrazol Butanonoxim, Acetonoxim Malonsäuredialkylester und ε-Caprolactam eingesetzt wird. Bei den Verbindungen der allgemeinen Formel I sind besonders bevorzugt: mit 3,5-Dimethylpyrazol oder mit 1,2,4 Triazol blockiertes 3-Isocyanatopropyltriethoxysilan.

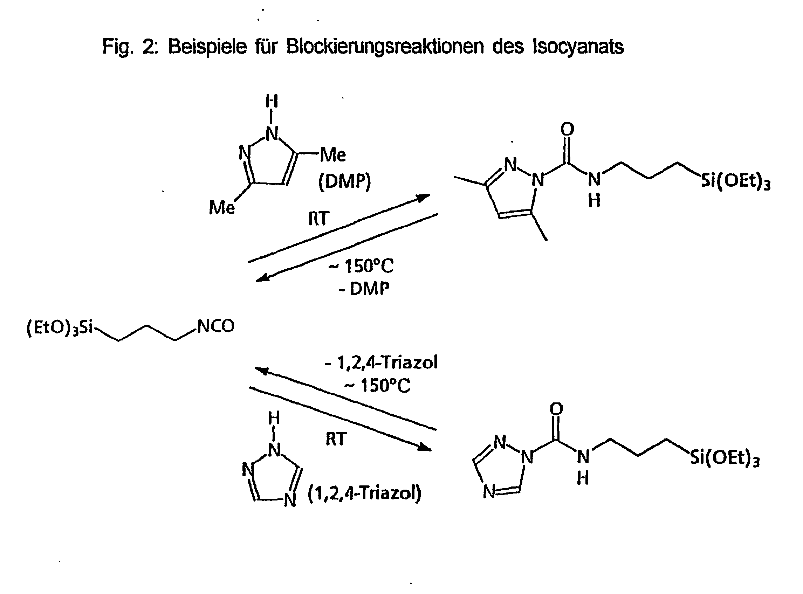

Wie aus der allgemeinen Formel I hervorgeht, weist der Rest R am Silicium 1 bis 3 Isocyanatgruppen auf. Diese Isocyanatgruppen können mit den oben genannten Blockierungsreagenzien für Isocyanate umgesetzt und so blockiert werden. Zwei Beispiele sind in Fig. 2 wiedergegeben. Das Isocyanatosilan wurde dabei in stöchiometrischer Menge mit 3, 5 Dimethylpyrazol und 1, 2, 4 Triazol umgesetzt. Die so erhaltenen blockierten Isocyanatosilane können dann ohne weitere Reinigungsschritte zum Synthetisieren der Beschichtungssysteme eingesetzt werden.

Die wie vorstehend beschrieben hergestellten blokkierten Verbindungen können dann mit jeder Art von hydrolysierbaren Siliciumverbindungen und Metallalkoxiden co-kondensiert werden um ein anorganisches Netzwerk zu generieren. Auch ist eine Vernetzung mit rein organischen Verbindungen möglich.

Bevorzugte Verbindungen mit denen die blockierten Isocyanatosilane umgesetzt werden können, sind durch die allgemeine Formel II definiert.

II Xₘ-Si-R₄₋ₘ-Zₙ

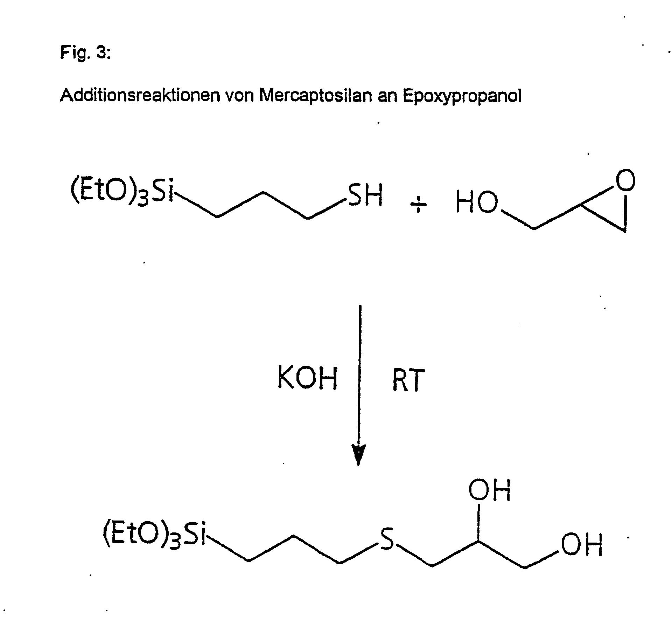

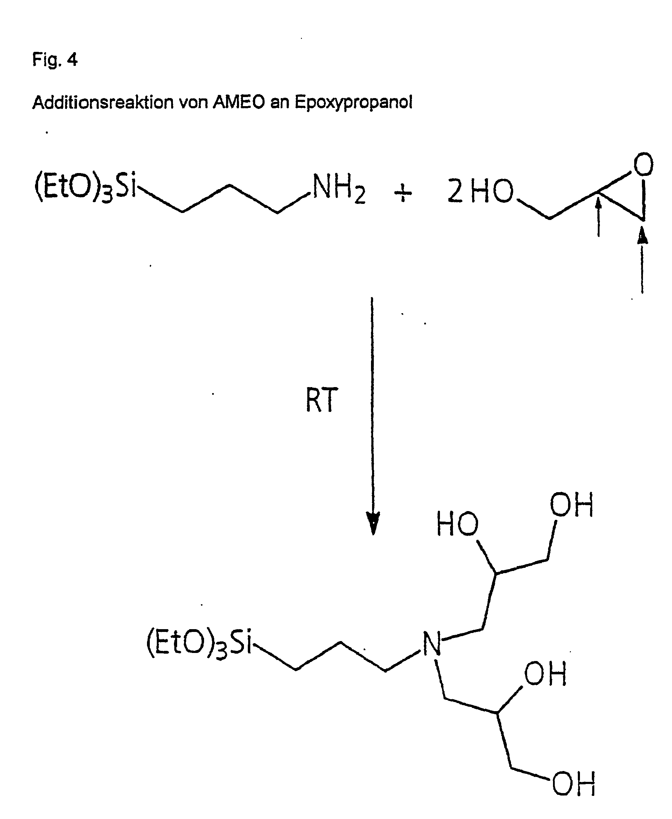

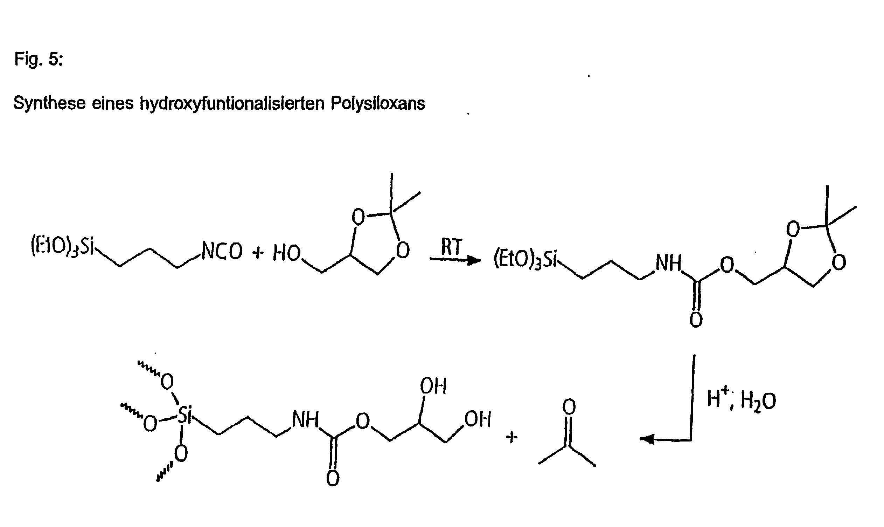

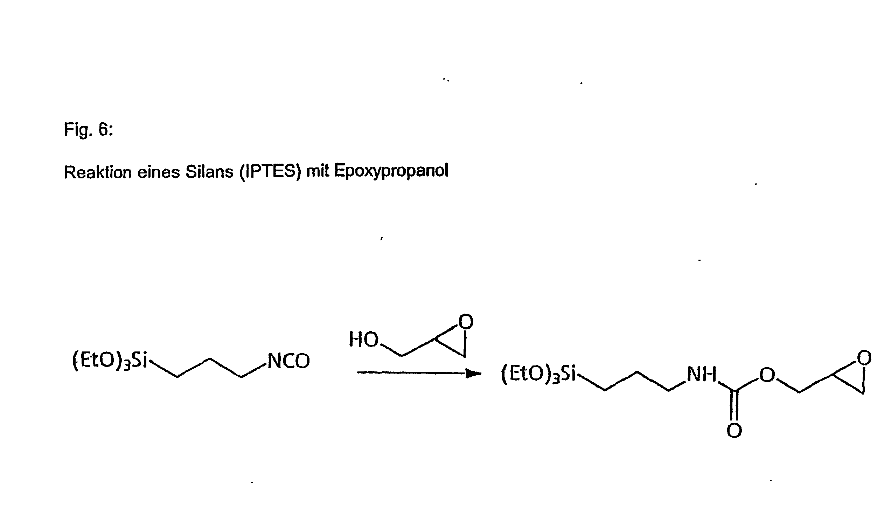

In der Formel II besitzen dabei die Reste X, R und der Index m die gleiche Bedeutung wie vorstehend bei der allgemeinen Formel I angegeben während n 1 bis 4 sein kann. Der Rest Z kann dabei eine oder mehrere Hydroxygruppen, eine Aminogruppe oder eine Epoxyfunktion tragen. Diese Verbindungen können dann wie im Reaktionsschema nach Fig. 1, mit dem blockierten Isocyanat umgesetzt werden. Bevorzugt ist hierbei, wenn Verbindungen der allgemeinen Formel II eingesetzt werden, die über mehrere funktionelle Gruppen Z verfügen, d.h. z.B. sogenannte Silanpolyole oder Silane, die mehrere NH₂-Gruppen oder Epoxygruppen tragen. In den Fign. 3 bis 6 sind bevorzugte Herstellungsbeispiele von derartigen hydroxyfunktionalisierten Silanen und Epoxyverbindungen angegeben. Fig. 2 zeigt dabei die Additionsreaktion von Mercaptosilan an Epoxypropanol, Fig. 4 die Additionsreaktion von 3-Aminopropyltriethoxysilan (AMEO) an Epoxypropanol und Fig. 5 die Synthese eines hydroxyfunktionalisierten Polysiloxans. Fig. 6 gibt das Reaktionsschema der Synthese eines Silans aus den Edukten Isocyanatopropyltriethoxysilan und Epoxypropanol wieder.

Bei der Herstellung der bewitterungsbeständigen Beschichtung nach der Erfindung ist es auch möglich, wie bisher schon aus der hybriden Sol-Gel-Chemie im Stand der Technik bekannt, daß die Hydrolyse in Gegenwart von 0 bis 40 Mol-% einer Metallverbindung der allgemeinen Formel III

III MeRₓ III

durchgeführt wird. Beispiele für Metalle sind hierbei Zinn, Titan, Zirkon und Aluminium. Der Rest R der gleich oder verschieden sein kann, ist aus Halogen, Alkoxy, Alkoxycarbonyl und Hydroxy ausgewählt, wobei es auch möglich ist, daß einige dieser Reste ganz oder teilweise durch einen Chelatliganden ersetzt sein können. Für den Fall, daß das Metall Aluminium ist, ist X gleich 3 und für die Fälle, für die das Metall Titan, Zinn und Zirkon ist, ist X gleich 4.

Besonders hervorzuheben beim erfindungsgemäßen Herstellungsverfahren ist es, daß auch zusätzlich noch vor, während oder nach der Hydrolyse eine organische Verbindung (nicht siliciumhaltig) zugegeben werden kann. In diesem Falle ist es nur erforderlich, daß die organische Verbindung mindestens eine Hydroxygruppe, eine Aminogruppe oder eine Anhydridfunktion aufweist, damit eine entsprechende Reaktion mit dem deblockierten Isocyanat durchgeführt werden kann. Spezielle Beispiele hierfür sind Benzol-tricarbonsäureanhydrid (BTCA), Tris-(Hydroxyethyl)-Isocyanurat, 2,2-Bis-(4 Hydroxycyclohexyl)-propan (hydriertes Bisphenol A, HBPA).

Bei der Herstellung der bewitterungsbeständigen Beschichtung kann mit den vorstehend näher beschriebenen Edukten in einer an und für sich bekannten Weise die hydrolytische Kondensation auch in Gegenwart eines sauren oder basischen Kondensationskatalysators durchgeführt werden. Grundsätzlich können auch bei dem Verfahren nach der Erfindung bei der Hydrolyse Additive zugesetzt werden, die ausgewählt sind aus organischen Verbindungen, Verlaufsmittel, Färbemittel, UV-Stabilisatoren, Füllstoffe, Viskositätsregler, Gleitmittel, Netzmittel, Antiabsetzmittel und/oder Oxydationsinhibitoren oder Mischungen davon. In bezug auf die Kondensationskatalysatoren und die Additive wird auf den offenbarungsgehalt der DE 38 36 815 sowie auf die EP 0 450 625 A1 Bezug genommen.

Weiterhin ist es vorteilhaft, wenn bei dem erfindungsgemäßen Beschichtungsverfahren die Substratoberfläche vor dem Aufbringen des Beschichtungsmaterials vorbehandelt wird. Als Vorbehandlungsverfahren kommen hierbei alle bisher aus dem Stand der Technik bekannten Vorbehandlungsverfahren in Frage, besonders das Aufbringen eines Primers, d.h. eines Haftvermittlers oder Verfahren bei denen die Oberfläche ausgeheizt, ausgelaugt oder mittels wäßriger bzw. organischer Medien vorgereinigt und/oder einer elektrischen Entladung ausgesetzt wird.

Zur Aushärtung der Beschichtung ist es dabei vorgesehen, diese einer Wärmebehandlung bei einer Temperatur von 120 bis 300 °C auszusetzen. Wie im Stand der Technik bisher bei den schon bekannten hybriden Sol-Gel-Schichten beschrieben, kann auch in Abhängigkeit von den Ausgangssystemen eine Behandlung mit Strahlung vorzugsweise mit IR, UV oder mit Mikrowellen erfolgen.

Die Erfindung wird nachfolgend anhand von Ausführungsbeispielen näher beschrieben.

### Beispiel 1

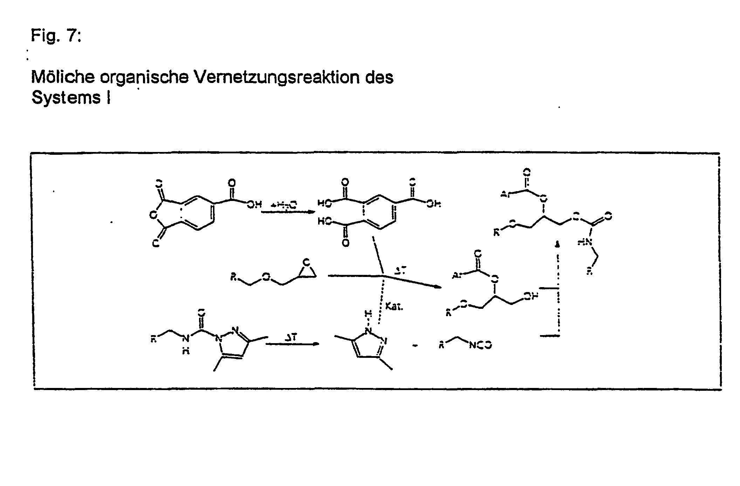

Beispiel 1 betrifft die Herstellung des Systems I aus DMP-IPTES, GPTES und BTCA (Benzoltricarbonsäure-anhydrid), die gemischt und mit der stöchiometrischen Wassermenge hydrolysiert wurden. Die Edukte wurden im Verhältnis von einem Teil BTCA zu drei Teilen DMP-IPTES und drei Teilen GPTES eingesetzt. Die Hydrolyse wurde durch die eingesetzte Carbonsäure BTCA katalysiert. Die möglichen Vernetzungsreaktionen sind in Abbildung 7 wiedergegeben.

Das Beschichtungsmaterial wurde 45 min bei 180 °C ausgehärtet. Die Schichten waren fest und transparent, die Schichtdicke betrug 3 µm. Die mechanischen Eigenschaften wurden mit Hilfe von Mikrohärte-Messungen bestimmt. Um die mechanischen Eigenschaften weiter zu verbessern, wurde bei der Synthese Tetraethoxysilan (TEOS) zur Erhöhung der anorganischen Quervernetzung in zwei unterschiedlichen Mengen zugesetzt. Es wurden 2 (System Ia) bzw. 4 Teile (System Ib) TEOS, bezogen auf die eingesetzte Stoffmenge der aromatischen Säure, hinzugefügt. Durch diese Veränderung konnten die Universalhärte und die anderen mechanischen Kenndaten deutlich verbessert werden (Tab. 1).

**Tab. 1**

| Veränderung der Universalhärte mit zunehmendem TEOS-Gehalt (45 min bei 180 °C getempert) | | | | | | |
|---|---|---|---|---|---|---|
| Sys. | TEOS/ BTCA | HU [N/mm²] | rₑ [%] | E_{HU}-Modul [GPa] | HUₚₗₐₛₜ [N/mm²] | Schichtdicke [µm] |
| I | 0 | 250 | 49 | 6,3 | 516 | 3 |
| Ia | 2 | 327 | 58 | 7,2 | 692 | 2,5 |
| Ib | 4 | 400 | 66 | 7,9 | 994 | 2 |

Die Stabilität der Systeme gegenüber Feuchtigkeit ist hoch. Ein Kurzzeittest von 4 Tagen Kondenswasserklimaprüfung hat gezeigt, daß keine Veränderungen der Schichten auftreten.

System I und dessen Varianten bieten daher eine neue ausgezeichnete Möglichkeit, hybride Beschichtungsmaterialien herzustellen, die neben ausgezeichneter mechanischer Beständigkeit auch Stabilität gegenüber Feuchtigkeit aufweisen. Durch den ausschließlichen Einsatz von Ethoxysilanen zeichnen sie sich auch durch Methanolfreiheit aus.

### Beispiel 2

Beispiel 2 zeigt die Synthese des Systems II. Als Edukte wurden BTCA und das blockierte Isocyanatosilan (DMP-IPTES) im Verhältnis 1:3 verwendet. DMP-IPTES wurde im Überschuß eingesetzt, um die Carboxylgruppen möglichst vollständig umzusetzen. Die überschüssigen Isocyanatgruppen können verschiedene andere Vernetzungsreaktionen eingehen (vgl. Figur 1).

Die Synthese verläuft ähnlich wie die von System I. Die Hydrolyse ist nach 1 h Reaktionszeit bei RT abgeschlossen. Ein Vergleich der IR-Spektren des Beschichtungssols und der gehärteten Schicht zeigte, daß die für Fünfring-Imide charakteristische Bande bei 1770 cm⁻¹ beim Härten entsteht. Noch deutlicher als die IR-Spektren zeigten die Raman-Spektren das Entstehen der Imidverknüpfungen beim Härtungsprozeß.

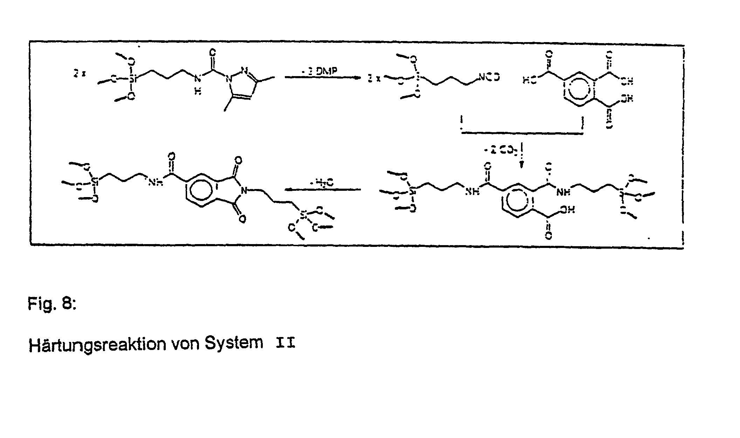

Aus den spektroskopischen Untersuchungen kann geschlossen werden, daß die organische Vernetzung im gewünschten Sinn stattgefunden hat. Figur 8 stellt den wahrscheinlichen Reaktionsablauf dar. Die Reaktion läuft in drei Schritten ab. Zuerst werden die Isocyanatgruppen deblockiert. Diese reagieren daraufhin mit den Carboxylgruppen unter Abspaltung von CO₂ zu Amiden. Ein Teil der Amidgruppen kann daraufhin unter Abspaltung von Wasser mit einer in ortho-Position befindlichen Carboxylfunktion ein cyclisches Imid bilden.

Die Schichten sind nach der thermischen Härtung von 30 min bei 180 °C hart und transparent. Die mechanischen Eigenschaften wurden mit Hilfe der Mikrohärtemessung untersucht. Tab. 2 faßt die Ergebnisse zusammen.

**Tab. 2**

| Mechanische Kenndaten von System II (30 min bei 180 °C gehärtet) | | | | |
|---|---|---|---|---|
| HU [N/mm²] | rₑ [%] | E_{HU}-Modul [GPa] | HUₚₗₐₛₜ [N/mm²] | Schichtdicke [µm] |
| 366 | 48 | 8,1 | 705 | 3,5 |

### Beispiel 3

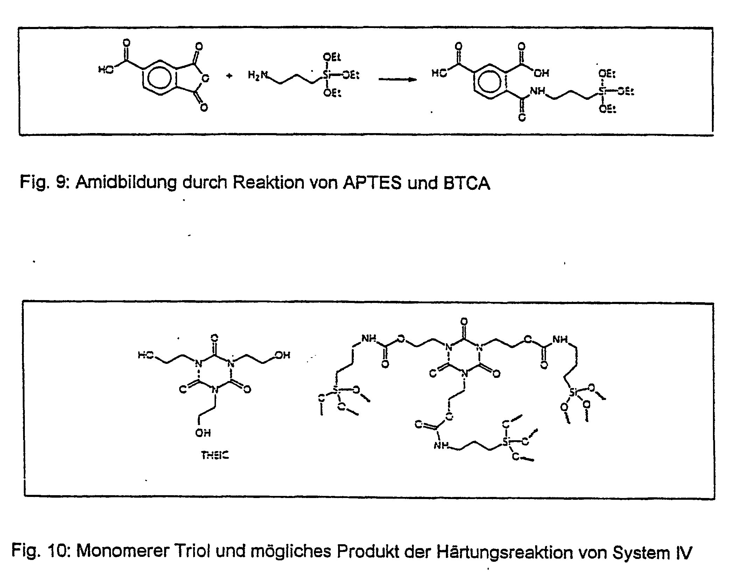

Das System III entspricht im wesentlichen System II. Anstelle von einem Drittel der in System II eingesetzten Menge DMP-IPTES wurde jedoch APTES verwendet. Dies hat den Vorteil, daß ein Amid aus BTCA und APTES vor dem Härtungsschritt gebildet werden kann (Fig.9).

Diese Umsetzung wurde vor der Hydrolyse durchgeführt, um eine Öffnung des Anhydrides durch Wasser zu verhindern. Das gesamte Reaktionsgemisch wurde schließlich hydrolysiert und zum Beschichten eingesetzt. Der Reaktionsverlauf ist dem in Figur 8 ähnlich, es wird nur weniger Blockierungsmittel (DMP) und CO₂ freigesetzt, wodurch sich die Schrumpfungsneigung während der Härtungsreaktion verringert. So können Schichtdicken oberhalb 10 µm erreicht werden.

Die Schichten sind transparent und hart. Die mechanischen Eigenschaften wurden wieder mit Hilfe des Mikrohärtemeßgerätes untersucht. Tab. 3 faßt die Ergebnisse zusammen. Sie entsprechen etwa denen von System II.

**Tab. 3**

| Mechanische Kenndaten von Systemen III (30 min bei 180 °C gehärtet) | | | | |
|---|---|---|---|---|
| HU [N/mm²] | rₑ [%] | E_{HU}-Modul [GPa] | HUₚₗₐₛₜ [N/mm²] | Schichtdicke [µm] |
| 352 | 50 | 7,6 | 710 | 18 |

System III ist wie System II methanolfrei und läßt sich bei RT lagern, ohne daß unerwünschte Reaktionen stattfinden. Die reaktiven organischen Gruppen sind geschützt (blockierte Isocyanate) oder haben schon reagiert (Amid-Bildung).

### Beispiel 4

Die bisher beschriebenen Systeme mit DMP-IPTES nutzen zum Härten entweder eine Kombination vieler Reaktionen, von denen eine die Urethanbildung ist, oder das Isocyanat als verkapptes Amin, mit dessen Hilfe Imide oder Amide entstehen. Im Unterschied dazu ist das System IV ein Beschichtungssystem, welches ausschließlich Urethanverknüpfungen als organische Bindeglieder besitzt. Verwendet wurden dazu nur Edukte, die aliphatische oder cycloaliphatische Gruppen enthalten. Dadurch ist der Aufbau des Systems dem der 1K- oder 2K-Polyurethanlacke ähnlich, die u.a. in der Automobilindustrie als bewitterungsstabile Systeme eingesetzt werden.

System IV besteht aus einem Co-Hydrolysat von DMP-IPTES und ASB, welchem zur organischen Vernetzung Tris-(hydroxyethyl)-isocyanurat (THEIC) zugesetzt wurde. Figur 10 zeigt die Triol-Komponente THEIC und das Produkt der Härtungsreaktion des Systems.

Die mechanischen Eigenschaften von Schichten wurden wie in den vorangegangenen Untersuchungen mit Hilfe von Mikrohärte-Messungen bestimmt (Tabelle 4).

**Tab. 4**

| Mechanische Kenndaten von System IV (30 min bei 180 °C gehärtet) | | | | |
|---|---|---|---|---|
| HU [N/mm²] | rₑ [%] | E_{HU}-Modul [GPa] | HUₚₗₐₛₜ [N/mm²] | Schichtdicke [µm] |
| 323 | 48 | 7,1 | 623 | 5,0 |

Mit der Lagerung bei RT verändert sich die Härte dieses Systems. Tabelle 6 zeigt die Veränderung nach 3,5 Monaten Lagerung bei RT.

**Tab. 6**

| Mechanische Kenndaten von Systemen IV (30 min bei 180 °C gehärtet) nach 3,5 Monaten Lagerung bei RT | | | | |
|---|---|---|---|---|
| HU [N/mm²] | rₑ [%] | E_{HU}-Modul [GPa] | HUₚₗₐₛₜ [N/mm²] | Schichtdicke [µm] |
| 296 | 42 | 6,9 | 525 | 5,2 |

### Beispiel 5

System V ist eine Abwandlung von Formulierung IV. Anstelle des dreifach vernetzenden THEIC wurde als hydroxygruppen-tragende Komponente 2,2-Bis-(4-hydroxycyclohexyl)-propan eingesetzt. Die Verbindung kann auch als hydriertes Bisphenol A (HBPA) bezeichnet werden.

Aufgrund der im Vergleich zu System IV erwarteten weitmaschigeren, organischen Verknüpfungen wurde zum Ausgleich der anorganische Anteil erhöht. Neben 50 mol-% DMP-IPTES wurden 30 mol-% ASB und 20 mol-% TEOS eingesetzt. Das Verhältnis von blockierten Isocyanatzu Hydroxygruppen betrug 1,2:1. Die mechanischen Eigenschaften einer Schicht, die nach Härtung bei 180 °C erhalten wurden, sind in Tabelle 6 dargestellt.

**Tab. 6**

| Mechanische Kenndaten von System V (45 min bei 180 C) | | | | |
|---|---|---|---|---|
| HU [N/mm²] | rₑ [%] | E_{HU}-Modul [GPa] | HUₚₗₐₛₜ [N/mm²] | Schichtdicke [µm] |
| 378 | 56 | 7,7 | 831 | 3,0 |

Aufgrund des hohen anorganischen Anteils ist System V härter als System IV.

### Bewitterungsbeständigkeit von System IV und V

Zur Untersuchung der Bewitterungsbeständigkeit wurde der QUV-B Test der Firma Q-Panel durchgeführt. Als Substrat wurde Aluminium eingesetzt. Die Proben werden cyclisch 4 h bei 40 °C mit Wasser betaut und 4 h bei 60 °C trocken mit UV-B Licht bestrahlt. Sie sind neben der Belastung durch Feuchtigkeit und UV-Licht auch einem regelmäßigen Temperatur- und Feuchtigkeitswechsel ausgesetzt.

Die Systeme IV und V wurden 1500 h im QUV-B-Test bewittert. In verschiedenen Zeitabständen wurden dem Test Proben entnommen und charakterisiert.

Schon bei der visuellen Beurteilung der Proben ist zu erkennen, daß die Schichten ein hohes Maß an Bewitterungsstabilität besitzen. Auch nach 1500 h sind keine gravierenden Schädigungen der Oberfläche (wie Vergilbung, Rißbildung, Ablösung) zu erkennen.

### Veränderung des Glanzes während der Bewitterung

Da Beschichtungen nicht nur Schutzanforderungen zu genügen, sondern in den meisten Fällen auch dekorative Aufgaben zu erfüllen haben, darf sich der optische Eindruck auch nach Bewitterung nicht gravierend ändern. Glanzmessungen sind ein gutes Mittel, den optischen Eindruck meßtechnisch zu erfassen und Veränderungen zu quantifizieren. Da die Degradation einer Schicht meist mit dem Verlust der optischen Qualität einhergeht, kann auf diese Weise auch eine Aussage über die Beständigkeit des Systems gemacht werden. Die Glanzmessungen wurden unter Einstrahlwinkeln von 20°, 60° und 85° durchgeführt.

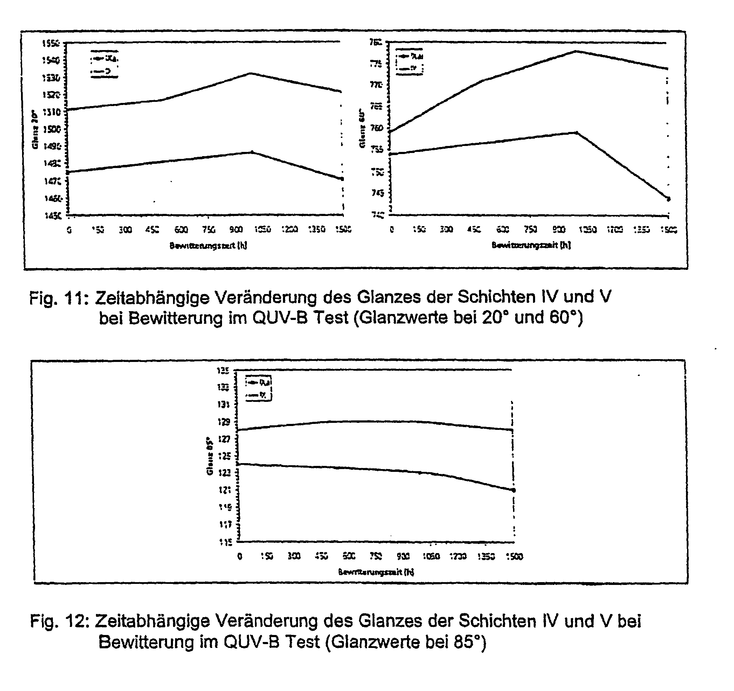

Die Ergebnisse sind in Figur 11 und Figur 12 dargestellt. Sie bestätigen die visuelle Beurteilung der Proben. System IV erleidet während der Bewitterungsphase praktisch keinen Glanzverlust. Der Glanz steigt sogar zunächst etwas an, bevor er nach 1000 h wieder leicht zurückgeht.

### Mikromechanische Untersuchungen

Um ein möglichst umfassendes Bild der Veränderungen durch die Belastung im QUV-B Test zu erhalten, wurden unbewitterte und bewitterte Proben auch mit Hilfe der Mikrohärtemessung charakterisiert.

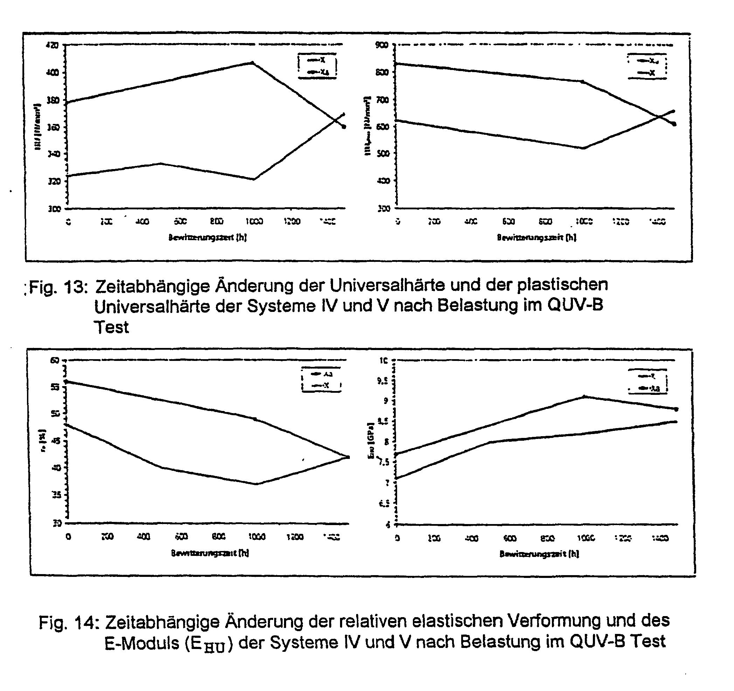

Die Figuren 13 und 14 zeigen, daß sich weder die Universalhärte noch die plastische Universalhärte durch die Bewitterung drastisch verändern.

## Patentansprüche

1. Verfahren zur Herstellung einer bewitterungsbeständigen Beschichtung auf Substraten wie Glas-, Metall- oder Polymeroberflächen bei dem auf dem Substrat eine Beschichtung durch hydrolytische Kondensation mindestens einer hydrolysierbaren Siliciumverbindung hergestellt wird, wobei die hydrolytische Kondensation mit 50 - 100 Mol-%, bezogen auf die monomeren Ausgangskomponenten, einer hydrolysierbaren Siliciumverbindung der allgemeinen Formel I
I Xₘ-Si-R₄₋ₘ-Yₙ
durchgeführt wird, wobei X gleich oder verschieden sind und Wasserstoff, Halogen, Alkoxy, Acyloxy, Alkylcarbonyl, Alkoxycarbonyl oder - NR'₂(R' - H und/oder Alkyl) bedeuten und die Reste R, die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Grupen -NR' oder - N(H)C(O)O (Urethan) unterbrochen sein können und einen oder mehrere Substitutenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxyxarbonyl-, Sulfonsäure-, Phosphorsäure-, Acryloxy-, Methacryloxy-, Epoxy- oder Vinylgruppen tragen können und Y ein blockiertes Isocyanat ist, mit m = 1 bis 3 und n = 1 bis 3 und zur Blockierung des Isocyanats Dimethylpyrazol, Butanonoxim, Acetonoxim, Malonsäuredialkylester, ∈-Caprolactam eingesetzt wird.

2. Verfahren nach Anspruch 1, **dadurch gekennzeichnet, dass** die Hydrolyse in Gegenwart von 0 bis 80 Mol-% einer weiteren Siliciumverbindung der allgemeinen Formel II
II Xm-Si -R₄₋ₘ-Zₙ
durchgeführt wird, wobei X, R, m die im Patentanspruch 1 angegebene Bedeutung besitzen und n = 1 - 4 ist sowie Z = OH, NH₂, NH(CH₂)NH₂ oder eine Epoxyfunktion ist.

3. Verfahren nach mindestens einem der Ansprüche 1 oder 2,
**dadurch gekennzeichnet, dass** die Hydrolyse in Gegenwart von 0 bis 40 Mol-% einer Metallverbindung der allgemeinen Formel III
III MeRₓ
durchgeführt wird, wobei Me für Titan, Zirkon, Zinn oder Aluminium, steht und R, das gleich oder verschieden sein kann, ausgewählt ist aus Halogen, Alkoxy, Alkoxycarbonyl und Hydroxy, wobei einige dieser Reste ganz oder teilweise durch einen Chelatliganden ersetzt sein können und X für Al 3 und Ti, Zr und Sn 4 ist.

4. Verfahren nach mindestens einem der Ansprüche 1 bis'3,
**dadurch gekennzeichnet, dass** die Hydrolyse in Gegenwart von einer weiteren Verbindung der allgemeinen Formel IV
IV R-Xₚ
durchgeführt wird, wobei R für einen organischen nicht siliciumhaltigen Rest steht und X = OH, NH₂ oder ein Anhydrid ist, mit ₚ = 1 bis 5, vorzugsweise ₚ = 1 bis 3, besonders bevorzugt ₚ = 2.

5. Verfahren nach mindestens einem der Ansprüche 1 bis 4,
**dadurch gekennzeichnet, dass** die hydrolysierbare Siliciumverbindung der allgemeinen Formel I bevorzugt mit DMP (Dimethylpyrazol) oder 1,2,4-Triazol blockiertes 3-Isocyanatopropyl-triethoxysilan ist.

6. Verfahren nach mindestens einem der Ansprüche 1 bis 5,
**dadurch gekennzeichnet, dass** die hydrolysierbare Siliciumverbindung der allgemeinen Formel II bevorzugt 3-Aminopropyl-triethoxysilan, 3-Glycidyloxypropyl-trimethoxysilan,DAMO, ist.

7. Verfahren nach mindestens einem der Ansprüche 1 bis 6,
**dadurch gekennzeichnet, dass** die Verbindung der allgemeinen Formel IV bevorzugt BTCA Benzol-tricarbonsäureanhydrid, THEIC(Tris-(hydroxyethyl)-isocyanat), HBPA (2,2-bis(4-hydroxycyclohexyl)propan) ist.

8. Verfahren nach mindestens einem der Ansprüche 1 bis 7,
**dadurch gekennzeichnet, dass** die hydrolytische Kondensation in Gegenwart eines sauren, basischen oder metallorganischen Kondensationskatalysators durchgeführt wird.

9. Verfahren nach mindestens einem der Ansprüche 1 bis 8,
**dadurch gekennzeichnet, dass** bei der Hydrolyse Additive zugesetzt werden, die ausgewählt sind aus organischen Verbindungen, Verlaufsmittel, Färbemitteln, UV-Stabilisatoren, Füllstoffen, Viskositätsreglern, Gleitmitteln, Netzmitteln, Antiabsetzmitteln und/oder Oxidationsinhibitoren oder Mischungen davon.

10. Verfahren nach mindestens einem der Ansprüche 1 bis 9,
**dadurch gekennzeichnet, dass** die Substratoberfläche vor der Aufbringung des Beschichtungsmaterials mit einem Primer behandelt, ausgeheizt, ausgelaugt, mittels wässriger und/oder organischen Medien vorgereinigt und/oder einer elektrischen Entladung ausgesetzt wird.

11. Verfahren nach mindestens einem der Ansprüche 1 bis 10,
**dadurch gekennzeichnet, dass** die Beschichtung durch Wärmebehandlung bei einer Temperatur bis 300°C, vorzugsweise 110 bis 240°C, und/oder durch Behandlung mit Strahlung vorzugsweise IR, Elektronenstrahlen, UV oder Mikrowellen ausgehärtet wird.

## Claims

1. Method for the production of a weather-resistant coating on substrates such as glass, metal or polymer surfaces, in which a coating is produced on the substrate by hydrolytic condensation of at least one hydrolysable silicon compound, the hydrolytic condensation being carried out with 50-100 mol%, relative to the initial monomer component, of a hydrolysable silicon compound of the general formula I:
I Xₘ-Si-R₄₋ₘ-Yₙ,
wherein X is the same or different and means hydrogen, halogen, alkoxy, acyloxy, alkylcarbonyl, alkoxycarbonyl or NR'₂(R'-H and/or alkyl), and the groups R, which can be the same or different, represent alkyl, alkenyl, alkinyl, aryl, arylalkyl, alkylaryl, arylalkenyl, alkenylaryl, arylalkinyl or alkinylaryl, and these groups can be interrupted by O- or S-atoms or the groups -NR' or -N(H)C(O)O (urethane) and can bear one or more substituents from the group of halogens and the possibly substituted amino, amide, aldehyde, keto, alkylcarbonyl, carboxy, mercapto, cyano, hydroxy, alkoxy, alkoxycarbonyl, sulphonic acid, phosphoric acid, acryloxy, methacryloxy, epoxy or vinyl groups and Y is a blocked isocyanate, with m = 1 to 3 and n = 1 to 3 and dimethyl pyrazole, butanonoxim, acetonoxim, malonic acid dialkyl ester, ε-caprolactam being used to block the isocyanate.

2. Method according to claim 1, **characterised in that** the hydrolysis is carried out in the presence of 0 to 80 mol% of an additional silicon compound of the general formula II:
II Xₘ-Si-R₄₋ₘ-Zₙ,
X, R, m having the meaning given in patent claim 1 and n = 1-4 and Z = OH, NH₂, NH(CH₂)NH₂ or is an epoxy function.

3. Method according to at least one of claims 1 or 2, **characterised in that** the hydrolysis is carried out in the presence of 0 to 40 mol% of a metal compound of the general formula III:
III MeRₓ
Me standing for titanium, zirconium, tin or aluminium and R, which can be the same or different, being selected from halogen, alkoxy, alkoxycarbonyl and hydroxy, it being possible for some of these groups to be partially or completely replaced by a chelate ligand and X is 3 for Al and 4 for Ti, Zr and Sn.

4. Method according to at least one of claims 1 to 3, **characterised in that** the hydrolysis is carried out in the presence of an additional compound of the general formula IV:
IV R-Xₚ
R standing for an organic group which does not contain silicon and X = OH, NH₂ or an anhydride, with p = 1 to 5, preferably p = 1 to 3, by particular preference p = 2.

5. Method according to at least one of claims 1 to 4, **characterised in that** the hydrolysable silicon compound of the general formula I is preferably 3-isocyanatopropyl triethoxysilane blocked with DMP (dimethyl pyrazole) or 1,2,4,-triazole.

6. Method according to at least one of claims 1 to 5, **characterised in that** the hydrolysable silicon compound of the general formula II is preferably 3-aminopropyl triethoxysilane, 3-glycidyloxypropyl trimethoxysilane, DAMO.

7. Method according to at least one of claims 1 to 6, **characterised in that** the compound of the general formula IV is preferably BTCA (benzene tetracarboxylic anhydride), THEIC (tris-(hydroxyethyl)isocyanurate) or HBPA (2,2-bis(4-hydroxycyclohexyl)propane).

8. Method according to at least one of claims 1 to 7, **characterised in that** the hydrolytic condensation takes place in the presence of an acid, basic or organometallic condensation catalyst.

9. Method according to at least one of claims 1 to 8, **characterised in that** during the hydrolysis, additives are added which are selected from organic compounds, flow improvers, dyes, UV stabilisers, fillers, viscosity regulators, slip agents, wetting agents, antisettling agents and/or oxidation inhibitors or mixtures thereof.

10. Method according to at least one of claims 1 to 9, **characterised in that**, before the coating material is applied, the substrate surface is treated with a primer, fully cured, lixiviated, pre-cleaned by means of aqueous and/or organic media and/or exposed to an electric discharge.

11. Method according to at least one of claims 1 to 10, **characterised in that** the coating is hardened by heat treatment at a temperature of up to 300°C, preferably between 110 and 240°C, and/or by treatment with irradiation, preferably infrared, electron beams, ultraviolet or microwaves.

## Revendications

1. Procédé de fabrication d'un revêtement résistant aux intempéries sur des substrats tels que les surfaces de verre, de métal ou de polymère,
dans lequel on produit sur le substrat un revêtement par condensation hydrolytique d'au moins un composé de silicium hydrolysable, la condensation hydrolytique étant effectuée à l'aide de 50 à 100 % molaires, par rapport aux composants initiaux monomères, d'un composé de silicium hydrolysable répondant à la formule générale (I) :
I Xₘ-Si-R₄₋ₘ-Yₙ
où les X sont identiques ou différents et désignent les substances suivantes : hydrogène, halogène, alcoxy, acyloxy, alkylcarbonyle, alcoxycarbonyle ou -NR'₂ (R' - H et/ou alkyle) ; les restes R, qui peuvent être identiques ou différents, représentent les substances suivantes : alkyle, alcényle, alcynyle, aryle, arylalkyle, alkylaryle, arylalcényle, alcénylaryle, arylalcynyle ou alcylynaryle, ces restes pouvant être interrompus par des atomes O ou S ou par les groupes -NR' ou -N (H) C (O) O (uréthane) et pouvant porter un ou plusieurs substituants du groupe des halogènes et des groupes, le cas échéant substitués, amino, amide, aldéhyde, céto, alkylcarbonyl, carboxy, mercapto, cyano, hydroxy, alcoxy, alcoxycarbonyle, acide sulfonique, acide phosphorique, acryloxy, méthacryloxy, époxy ou vinyle ; Y est un isocyanate bloqué, avec m = 1 à 3 et n = 1 à 3, et pour le blocage de l'isocyanate est mise en oeuvre l'une des substances suivantes : diméthylpyrazol, butanonoxime, acétonoxime, dialkylester d'acide malonique, ε-caprolactame.

2. Procédé selon la revendication 1,
**caractérisé en ce que**
l'hydrolyse est effectuée en présence de 0 à 80 % molaires d'un autre composé de silicium répondant à la formule générale (II) :
II Xₘ-Si-R₄₋ₘ-Zₙ
où X, R, m ont les significations indiquées dans la revendication 1, où n = 1 à 4 et où Z = OH, NH₂, NH (CH₂) NH₂ ou une fonction époxy.

3. Procédé selon au moins l'une des revendications 1 ou 2,
**caractérisé en ce que**
l'hydrolyse est effectuée en présence de 0 à 40 % molaires d'un composé métallique répondant à la formulé générale (III) :
III Me Rₓ
où Me représente l'un des métaux suivants : titane, zirconium, étain ou aluminium ; R, qui peut être identique ou différent, peut être sélectionné parmi les restes suivants : halogène, alcoxy, alcoxyycarbonyle et hydroxy, certains de ces restes pouvant être remplacés entièrement ou partiellement par un ligand de chélate ; X représente Al 3 et Ti, Zr et Sn 4.

4. Procédé selon au moins une des revendications 1 à 3,
**caractérisé en ce que**
l'hydrolyse est effectuée en présence d'un autre composé répondant à la formule générale (IV) :
IV R - Xₚ
où R représente un reste organique ne contenant pas de silicium, et X = OH, NH₂ ou un anhydride, avec p = 1 à 5, de préférence p = 1 à 3 et de manière particulièrement privilégiée p = 2.

5. Procédé selon au moins l'une des revendications 1 à 4,
**caractérisé en ce que**
le composé de silicium hydrolysable répondant à la formule générale (I) est de préférence un 3-isocyanatopropyl-triéthoxysilane bloqué avec du DMP (diméthylpyrazol) ou du 1,2,4-triazol.

6. Procédé selon au moins l'une des revendications 1 à 5,
**caractérisé en ce que**
le composé de silicium hydrolysable répondant à la formule générale (II) est de préférence du 3-aminopropyl-triéthoxysilane, 3-glycidyloxypropyl-triméthoxysilane, DAMO.

7. Procédé selon au moins l'une des revendications 1 à 6,
**caractérisé en ce que** le composé répondant à la formule générale (IV) est de préférence du BTCA (anhydride d'acide tricarboxylique de benzène), du THEIC (tris-(hydroxyéthyl)isocyanate), du HBPA (2,2-bis(4-hydroxycyclohexyl)-propane).

8. Procédé selon au moins l'une des revendications 1 à 7,
**caractérisé en ce que**
la condensation hydrolytique est effectuée en présence d'un catalyseur de condensation acide, basique ou organométallique.

9. Procédé selon au moins l'une des revendications 1 à 8,
**caractérisé en ce que**
lors de l'hydrolyse, sont ajoutés des additifs sélectionnés parmi les produits suivants : composés organiques, produits d'écoulement, colorants, stabilisateurs d'UV, matières de remplissage, régulateurs de viscosité, lubrifiants, agents de mouillage, agents anti-dépot et/ou inhibiteurs d'oxydation, ou mélanges de ces produits.

10. Procédé selon au moins l'une des revendications 1 à 9,
**caractérisé en ce que**
avant la mise en place du matériau de revêtement, la surface de substrat est traitée à l'aide d'une couche de fond, flambée, lessivée, prénettoyée à l'aide de milieux aqueux et/ou organiques, et/ou soumise à une décharge électrique.

11. Procédé selon au moins l'une des revendications 1 à 10,
**caractérisé en ce que**
le revêtement est durci par traitement thermique à une température allant jusqu'à 300 °C, et de préférence de 110 à 240°C, et/ou par traitement par irradiation, de préférence par rayons infrarouges, faisceaux électronique, rayons ultraviolets ou micro-ondes.
